# EUROPEAN PATENT SPECIFICATION

(11) **EP 2 436 568 B1**
(45) Date of publication and mention of the grant of the patent: **05.04.2017**
(21) Application number: 09812505.7
(22) Date of filing: 25.05.2009
(51) Int. Cl.: B60T 8/17, B60T 11/18, B60T 11/20, B60T 8/40, B60T 7/04, B60T 8/38

(54) **BRAKING CONTROL APPARATUS**
BREMSSTEUERVORRICHTUNG
DISPOSITIF DE COMMANDE DE FREINAGE

(43) Date of publication of application: 04.04.2012
(73) Proprietor: TOYOTA JIDOSHA KABUSHIKI KAISHA, Toyota-shi, Aichi-ken, 471-8571 (JP)
(72) Inventor: NIMURA, Kazunori, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2009/002297
(87) International publication number: WO 2010/137059

(56) References cited:
- JP-A- 2006 160 085
- JP-A- 2006 306 272
- JP-A- 2008 273 373
- JP-A- 2008 273 373
- JP-A- 2008 273 374
- JP-A- 2008 273 374
- US-A1- 2005 066 656

## Description

### TECHNICAL FIELD

The present invention relates to a braking control apparatus including a master cylinder which supplies a brake fluid pressure to a wheel cylinder provided on each wheel of a vehicle and a stroke simulator which creates a pedal feeling.

### BACKGROUND TECHNOLOGY

It has heretofore been known that, in by-wire brake systems such as ECB (Electrically Controlled Brake) systems, target deceleration is calculated based on the pedal stroke of a brake pedal and the master cylinder pressure. And connected to the master cylinder of such systems is a stroke simulator which gives a driver a pedal feeling by producing a reaction force in the brake pedal.

Patent Document 1 discloses a tandem-type master cylinder apparatus having a first piston and a second piston. In this tandem-type master cylinder apparatus, a first fluid pressure chamber and a second fluid pressure chamber, the former being close to the brake pedal, are defined by those pistons and the cylinder bottom, and the stroke simulator is connected to the second fluid pressure chamber. In this apparatus, a larger value is set for the idle stroke L2 (e.g., 5 to 7 mm) up to when the second fluid pressure chamber is shut off from a reservoir by a displacement of the second piston than for the idle stroke L1 (e.g., 1 to 2 mm) up to when the first fluid pressure chamber is shut off from the reservoir by a displacement of the first piston. Moreover, the return spring disposed in the second fluid pressure chamber is set to a smaller set load than the return spring disposed in the first fluid pressure chamber. It is asserted therefore that when the second piston is first displaced in the initial stage of pedal stroke, the pedal reaction force at the start of pressing the brake pedal can be made lighter because the idle stroke L2 is relatively long.

### [Prior Art Documents]

### [Patent Documents]

[Patent Document 1] Japanese Patent Application Publication No. 2008-273374.
[Patent Document 2] Japanese Patent Application Publication No. 2008-273373.

### SUMMARY OF THE INVENTION

### PROBLEMS TO BE SOLVED BY THE INVENTION

However, as Patent Document 1 discloses, the brake fluid flows into the stroke simulator after the second piston has been displaced by the idle stroke L2 for the second fluid pressure chamber. That is, the stroke simulator starts moving at a point during a pedal stroke. At this time, a resistance from the stroke simulator is transmitted to the brake pedal, and consequently a bump can often be felt especially at a sudden braking, thus making pedal feeling inferior. If the stroke sensor should develop a malfunction, then the braking force will be generated based only on the value of the master cylinder pressure sensor. In such a case, the hydraulic pressure of the master cylinder does not rise until the end of the idle stroke L2, so that it is necessary to continue the stroke of the pedal a few moments longer to produce the braking force. Furthermore, should a failure of the by-wire brake system occur, it will be necessary to send the brake fluid to the wheel cylinders of the wheels directly from the master cylinder. However, the idle stroke L2 is relatively long, and therefore it is necessary to set the pedal stroke correspondingly long. As a consequence, the master cylinder becomes larger in size.

The present invention has been made in view of the foregoing circumstances, and a purpose thereof is to provide a technology for reducing the effects in the initial phase of pedal stroke due to the presence of idle stroke.

### MEANS FOR SOLVING THE PROBLEMS

One embodiment of the present invention relates to a braking control apparatus. This apparatus comprises: a master cylinder and a stroke simulator. The master cylinder includes: a first piston coupled to a brake pedal and configured to be displaced in response to a brake operation; a second piston movable in linkage with the first piston; a cylinder for housing the first piston and the second piston moving slidably in an axial direction; a first fluid pressure chamber defined by the first piston and the second piston, having a passage communicating with a reservoir tank for storing brake fluid, and configured to generate a fluid pressure when communication with the reservoir tank is blocked at displacement of the first piston by a first stroke; a second fluid pressure chamber defined by the second piston and a side wall of the cylinder, having a passage communicating with the reservoir tank, and configured to generate a fluid pressure when communication with the reservoir tank is blocked at displacement of the second piston by a second stroke; a first fluid pressure line connecting the first fluid pressure chamber to a wheel cylinder provided on a first wheel; and a second fluid pressure line connecting the second fluid pressure chamber to a wheel cylinder provided on a second wheel. The stroke simulator is configured to communicate with the fluid pressure chamber being subject to the smaller of the first stroke and the second stroke and is configured to generate a reaction force in the brake pedal when the brake is operated. The fluid pressure chamber to which the stroke simulator is connected when the brake pedal is operated generates a fluid pressure before the other fluid pressure chamber.

According to this embodiment, the fluid pressure chamber, connected to the stroke simulator, first generates the fluid pressure. A smaller value is set for the piston stroke from when the communication to the reservoir tank is shut off up to generating the fluid pressure in this fluid pressure chamber than for the piston stroke in the other fluid pressure chamber. Hence, the fluid pressure is transmitted to the stroke simulator from an early stage of pedal stroke so as to generate the brake pedal reaction force. As a result, pedal feeling can be improved.

Another embodiment relates also to a braking control apparatus. This apparatus comprises: a master cylinder and a stroke simulator. The master cylinder includes: a first piston coupled to a brake pedal and configured to be displaced in response to a brake operation; a second piston movable in linkage with the first piston; a cylinder for housing the first piston and the second piston moving slidably in an axial direction; a first fluid pressure chamber, defined by the first piston and the second piston having a passage communicating with a reservoir tank for storing brake fluid, and configured to generate a fluid pressure when communication with the reservoir tank is blocked at displacement of the first piston by a first stroke; a second fluid pressure chamber defined by the second piston and a side wall of the cylinder, having a passage communicating with the reservoir tank, and configured to generate a fluid pressure when communication with the reservoir tank is blocked at displacement of the second piston by a second stroke which is smaller than the first stroke; a first fluid pressure line connecting the first fluid pressure chamber to a wheel cylinder provided on a first wheel; and a second fluid pressure line connecting the second fluid pressure chamber to a wheel cylinder provided on a second wheel. The stroke simulator is configured to communicate with the second fluid pressure chamber and is configured to generate a reaction force in the brake pedal when the brake is operated. The second piston is so configured as to be displaced first when the brake pedal is operated.

According to this embodiment, the idle stroke of the second fluid pressure chamber connected to the stroke simulator is set smaller than the idle stroke of the first fluid pressure chamber. And when the second piston is first displaced at the time the brake pedal is operated, the brake fluid pressure is transmitted from the second fluid pressure chamber to the stroke simulator in a short time because the idle stroke is relatively short. Hence, the reaction force generated by the stroke simulator can be transmitted to the brake pedal from an early stage of pedal stroke, so that pedal feeling can be improved.

The braking control apparatus may further comprise: a first return spring, disposed inside the first fluid pressure chamber, for biasing the first piston toward an initial position when brake pedal operation is released; and a second return spring, disposed inside the second fluid pressure chamber, for biasing the second piston toward an initial position when brake pedal operation is released. A biasing force exerted by the second return spring at displacement of the second piston by a second stroke from the initial position may be set smaller than a biasing force exerted by the first return spring. According to this embodiment, a difference is made between the biasing forces exerted by the return springs, so that the second piston can be first displaced.

The first piston and the second piston may be coupled to each other, and a structure for restricting the second piston frommoving apart from the first piston by more than a predetermined distance may be provided in the first fluid pressure chamber. According to this embodiment, the biasing force exerted by the first return spring is set larger than the biasing force exerted by the second return spring. Thus, the first piston and the second piston are displaced in a manner such that the compression in the first fluid pressure chamber is restricted when the brake pedal is pressed. This achieves a small amount of displacement in the restricting structure. Hence, abnormal noise that may be caused by the restricting structure when the brake pedal is returned can be reduced.

Still another embodiment relates also to a braking control apparatus. This apparatus comprises: a maser cylinder and a stroke simulator. The master cylinder includes: a first piston coupled to a brake pedal and configured to be displaced in response to a brake operation; a second piston movable in linkage with the first piston; a cylinder for housing the first piston and the second piston moving slidably in an axial direction; a first fluid pressure chamber defined by the first piston and the second piston, having a passage communicating with a reservoir tank for storing brake fluid, and configured to generate a fluid pressure when communication with the reservoir tank is blocked at displacement of the first piston by a first stroke; a second fluid pressure chamber defined by the second piston and a side wall of the cylinder, having a passage communicating with the reservoir tank, and configured to generate a fluid pressure when communication with the reservoir tank is blocked at displacement of the second piston by a second stroke which is larger than the first stroke; a first fluid pressure line connecting the first fluid pressure chamber to a wheel cylinder provided on a first wheel; and a second fluid pressure line connecting the second fluid pressure chamber to a wheel cylinder provided on a second wheel. The stroke simulator is configured to communicate with the first fluidpressure chamber and is configured to generate a reaction force in the brake pedal when the brake is operated. The first piston is so configured as to be displaced first when the brake pedal is operated.

According to this embodiment, the idle stroke of the first fluid pressure chamber connected to the stroke simulator is set smaller than the idle stroke of the second fluid pressure chamber. And when the first piston is first displaced when the brake pedal is operated, the brake fluid pressure is transmitted from the first fluid pressure chamber to the stroke simulator in a short time because the idle stroke is relatively short. Hence, the reaction force generated by the stroke simulator can be transmitted to the brake pedal from an early stage of pedal stroke, so that pedal feeling can be improved.

The braking control apparatus may further comprise: a first return spring, disposed inside the first fluid pressure chamber, for biasing the first piston toward an initial position when brake pedal operation is released; and a second return spring, disposed inside the second fluid pressure chamber, for biasing the second piston toward an initial position when brake pedal operation is released. A biasing force exerted by the first return spring at displacement of the first piston by a first stroke from the initial position may be set smaller than a biasing force exerted by the second return spring. According to this embodiment, a difference is made between the biasing forces exerted by the return springs, so that the first piston can be first displaced.

Implementations of the invention expressed in the form of methods, apparatuses and systems, the invention expressed in their forms interchanged therebetween or replaced with another, and the invention where the orders of process steps are rearranged may also be effective as additional modes of the present invention.

### EFFECT OF THE INVENTION

The present invention reduces the effects in the initial phase of pedal stroke due to the presence of idle stroke in a master cylinder constituting a by-wire brake system.

### BRIEF DESCRIPTION OF THE DRAWINGS

FIG. 1 is a system diagram showing a brake control apparatus according to an embodiment of the present invention.
FIG. 2 is a schematic cross-sectional view of a master cylinder and a stroke simulator shown in FIG. 1.
FIGS. 3A and 3B are enlarged views of the vicinities A and B of return passages shown in FIG. 2, respectively.
FIG. 4 shows a master cylinder at a point of time when a driver starts to step on a brake pedal.
FIG. 5 shows a master cylinder at a point of time when a brake pedal is pressed further.
FIG. 6 shows a master cylinder at a point of time when a brake pedal is pressed further than it is in FIG. 5.
FIG. 7 shows a master cylinder at a point of time when a brake pedal is pressed further than it is in FIG. 6.
FIG. 8 shows enlarged views of the vicinities of restricting structures shown in FIG. 4 to FIG. 6, respectively.

### DESCRIPTION OF THE REFERENCE NUMERALS

- 12: Brake pedal
- 14: Master cylinder
- 20: Wheel cylinder
- 24: Stroke simulator
- 26: Reservoir tank
- 62: Piston
- 64: Piston
- 71: First fluid pressure chamber
- 72: First fluid pressure chamber spring
- 73: First piston
- 76: Communicating hole
- 77: Return passage
- 81: Second fluid pressure chamber
- 82: Second fluid pressure chamber spring
- 83: Second piston
- 86: Communicating hole
- 87: Return passage

### BEST MODE FOR CARRYING OUT THE INVENTION

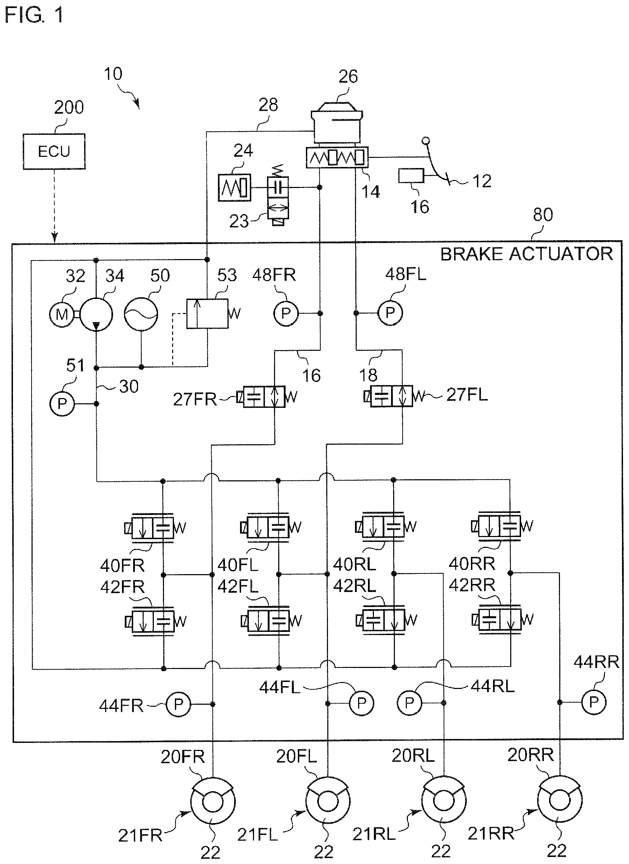

FIG. 1 is a system diagram showing a brake control apparatus 10 according to an embodiment of the present invention. The brake control apparatus 10 shown in FIG. 1 constitutes an electronically controlled brake system for a vehicle and is capable of making independent and optimal settings for the brakes on the four wheels of a vehicle in response to a driver' s operation of a brake pedal 12, which serves as a brake operation member. A vehicle equipped with the brake control apparatus 10 according to the present embodiment is provided with a not-shown steering apparatus for steering the steering wheels of the four wheels, not-shown running drive sources, such as an internal-combustion engine and a motor, for driving the drive wheels of the four wheels, and so forth.

The brake control apparatus 10 according to the present embodiment is mounted on a hybrid vehicle which is equipped with an electric motor and an internal-combustion engine, for instance, as the running drive sources. For such a hybrid vehicle, both the regenerative braking for braking the vehicle by regenerating the kinetic energy of the vehicle as electrical energy and the hydraulic braking effected by the brake control apparatus 10 can be used for the purpose of braking the vehicle. A vehicle according to the present embodiment can implement a regenerative-cooperative braking control in which a desired braking force is generated by a combined use of regenerative braking and hydraulic braking.

Disk brake units 21FR, 21FL, 21RR and 21RL as braking force applying mechanisms apply braking force to a right front wheel, a left front wheel, a right rear wheel and a left rear wheel of a vehicle, respectively. The disk brake units 21FR to 21RL include their respective brake disks 22 and wheel cylinders 20FR to 20RL incorporated in their brake calipers. And the wheel cylinders 20FR to 20RL are connected to a brake actuator 80 through their respective fluid passages. Hereinbelow, the wheel cylinders 20FR to 20RL will be generically referred to as "wheel cylinder 20" or "wheel cylinders 20" as appropriate.

In the brake control apparatus 10, the brake actuator 80 is comprised of a right master cut valve 27FR, a left master cut valve 27FL, pressure increasing valves 40FR to 40RL, pressure reducing valves 42FR to 42RL, an oil pump 34, an accumulator 50 and the like, which will be described later. As a brake fluid is supplied to the wheel cylinder 20 from the brake actuator 80, a brake pad serving as a friction member is pressed against the brake disk 22 rotating together with the wheel. In this manner, a braking force is applied to each of the wheels.

It should be noted that while the disk brake units 21FR to 21RL are used in the present embodiment, other braking force applying mechanisms including wheel cylinders 20, such as drum brakes, may be used also. Otherwise, braking force applying mechanisms that control the pressing force of the friction member against the wheel using an electromotive drive mechanism such as an electric motor may be used instead of those controlling the pressing force of the friction member by a fluid force.

The brake pedal 12 is connected to a master cylinder 14 which sends out brake fluid as the operating fluid in response to pedal operation by a driver. The brake pedal 12 is provided with a stroke sensor 16 for detecting a pedal stroke. The stroke sensor 16 may be sensors for two different systems installed in parallel with each other. Connected to one of the output ports of the master cylinder 14 is a stroke simulator 24 which creates a reaction force corresponding to an operating force exerted on the brake pedal 12 by the driver. A simulator cut valve 23 is provided midway in a flow passage connecting the master cylinder 14 to the stroke simulator 24. The simulator cut valve 23 is a normally-closed type electromagnetic on-off valve which is closed when power is not being applied and opened when the operation of the brake pedal 12 by the driver is detected. Note here, however, that it is not essential that the simulator cut valve 23 be installed; instead, the stroke simulator 24 may be connected directly to the master cylinder 14 without involving the simulator cut valve 23.

Further connected to the one of the output ports of the master cylinder 14 is a brake hydraulic control pipe 16 for the not-shown right front wheel, and the brake hydraulic control pipe 16 is connected to the wheel cylinder 20FR which applies a braking force to the right front wheel. Also, connected to the other of the output ports of the master cylinder 14 is a brake hydraulic control pipe 18 for the not-shown left front wheel, and the brake hydraulic control pipe 18 is connected to the wheel cylinder 20FL which applies a braking force to the left front wheel.

The right master cut valve 27FR is provided at a midway point of the brake hydraulic control pipe 16 for the right front wheel, whereas the left master cut valve 27FL is provided at a midway point of the brake hydraulic control pipe 18 for the left front wheel. Hereinbelow, the right master cut valve 27FR and the left master cut valve 27FL will be generically referred to as "master cut valve 27" or "master cut valves 27" as appropriate.

The master cut valve 27 provided with an on-off controlled solenoid and a spring is a normally-open type electromagnetic control valve which ensures a closed state by an electromagnetic force generated by the solenoid upon receiving a predetermined control current and remains open when power is not being applied to the solenoid. The master cut valves 27 in an open state allow the bi-directional flow of brake fluid between the master cylinder 14 and the wheel cylinder 20FR of the front wheel as well as between the master cylinder 14 and the wheel cylinder 20FL thereof. The flow of brake fluid is shut off when the master cut valve 27 is closed with the supply of the predetermined control current to the solenoid.

When the master cylinder pressure is higher than the wheel cylinder pressure, the differential pressure works in such a manner as to open the master cut valve 27. That is, the master cut valve 27 is disposed so that the flow direction toward the wheel cylinder 20 from the master cylinder 14 is an automatically-opening direction thereof. Accordingly, the master cut valve 27 is mechanically opened by the action of differential pressure when the pressure at the master cylinder 14 is higher than that at the wheel cylinder 20 and the differential pressure exceeds the valve opening pressure of the master cut valve 27.

This valve opening pressure is determined in proportion to the control current to the master cut valve 27. The larger the control current is, the higher the valve opening pressure will be. Hence, the larger the control current is, the easier it will be to keep a closed state of the valve countering the differential pressure. The valve opening pressure is therefore a fluid pressure at which the valve is opened by the action of differential pressure when the differential pressure working on the valve having been closed by the supply of a valve closing current is raised gradually. Accordingly, there is a specific relationship (a linear relationship, for instance) between the valve c-osing current value and the valve opening pressure. Normally, the value of the aforementioned predetermined control current is so set as to provide a valve opening pressure higher than a maximum differential pressure that can work on the master cut valve 27. That is to ensure that the closed state of the valve is maintained according to a valve closing command from a control unit without any mechanical opening of the master cut valve 27 while it is in a closed state.

A right master pressure sensor 48FR for detecting a master cylinder pressure on a right front wheel side is provided at a midway point of the brake hydraulic control pipe 16 for the right front wheel, whereas a left master pressure sensor 48FL for measuring a master cylinder pressure on a left front wheel side is provided at a midway point of the brake hydraulic control pipe 18 for the left front wheel. In the brake control apparatus 10, when the brake pedal 12 is stepped on by the driver, the stroke sensor 46 detects the amount of pedal operation. However, it is also possible to obtain the pedal operating force (pedaling force) applied to the brake pedal 12 from the master cylinder pressure detected by the right master pressure sensor 48FR and the left master pressure sensor 48FL. Therefore, it is preferable from a failsafe point of view that the master cylinder pressure is monitored by the two pressure sensors 48FR and 48FL by assuming the failure of the stroke sensor 46. Hereinbelow, the right master pressure sensor 48FR and the left master pressure sensor 48FL will be generically referred to as "master pressure sensor 48" or "master pressure sensors 48" as appropriate.

Also, connected to the master cylinder 14 is a reservoir tank 26 for storing a brake fluid. Connected to the reservoir tank 26 is one end of a hydraulic supply-exhaust pipe 28, and the other end of the hydraulic supply-exhaust pipe 28 is connected to a suction opening of the oil pump 34 which is driven by a motor 32. A discharge opening of the oil pump 34 is connected to a high-pressure pipe 30, and connected to this high-pressure pipe 30 are the accumulator 50 and a relief valve 53. In the present embodiment, the oil pump 34 to be used is a reciprocating pump equipped with two or more pistons (not shown) which are each reciprocated by the motor 32. The accumulator 50 to be used is one that stores the pressure energy of brake fluid converted into a pressure energy of a filler gas such as nitrogen. It is to be noted that the motor 32, the oil pump 34 and the accumulator 50 may be constructed together as a power supply unit separate from the brake actuator 80 and installed outside the brake actuator 80.

The accumulator 50 stores brake fluid whose pressure is raised to about 14 to 22 MPa, for instance, by the oil pump 34. A valve outlet of the relief valve 53 is connected to the hydraulic supply-exhaust pipe 28. If the pressure of the brake fluid in the accumulator 50 rises abnormally to about 25 MPa, for instance, the relief valve 53 will open to return the high-pressure brake fluid to the hydraulic supply-exhaust pipe 28. Further, an accumulator pressure sensor 51, which detects the exit pressure of the accumulator 50, namely, the pressure of brake fluid in the accumulator 50, is provided on the high-pressure pipe 30.

And the high-pressure pipe 30 is connected to the wheel cylinder 20FR for the right front wheel, the wheel cylinder 20FL for the left front wheel, the wheel cylinder 20RR for the right rear wheel, and the wheel cylinder 20RL for the left rear wheel via the pressure increasing valves 40FR, 40FL, 40RR and 40RL, respectively. Hereinbelow, the pressure increasing valves 40FR to 40RL will be generically referred to as "pressure increasing valve 40" or "pressure increasing valves 40" as appropriate. The pressure increasing valves 40 each provided with a linear solenoid and a spring is normally-closed type electromagnetic flow control valves (linear valves) which are each closed when power is not being applied to the solenoid. The pressure increasing valves 40 are each disposed so that the differential pressure between the accumulator pressure on the upstream side and the wheel cylinder pressure on the downstream side works as a force to open them. The opening degree of the pressure increasing valves 40 is adjusted in proportion to the electric current supplied to their respective solenoids. Through the pressure increasing valves 40, the upstream pressure, namely the accumulator pressure, is supplied, so that the pressure to the wheel cylinders 20 is increased.

The wheel cylinder 20FR for the right front wheel and the wheel cylinder 20FL for the left front wheel are connected to the hydraulic supply-exhaust pipe 28 via the front-wheel-side pressure reducing valves 42FR and 42FL, respectively. The pressure reducing valves 42FR and 42FL are normally-closed type electromagnetic flow control valves (linear valves) which are used to reduce the pressure of the wheel cylinders 20FR and 20FL as needed. The pressure reducing valves 42FR and 42FL, each provided with a linear solenoid and a spring, are each closed when power is not being applied to the solenoid, and the opening degree thereof is adjusted in proportion to the electric current supplied to their respective solenoids. The pressure reducing valves 42FR and 42FL are each disposed so that the differential pressure between the wheel cylinder pressure on the upstream side and the reservoir pressure (atmospheric pressure) on the downstream side works as a force to open them.

On the other hand, the wheel cylinder 20RR for the right rear wheel and the wheel cylinder 20RL for the left rear wheel are connected to the hydraulic supply-exhaust pipe 28 via the pressure reducing valves 42RR and 42RL, respectively, which are normally-open type electromagnetic flow control valves. The rear-wheel-side pressure reducing valves 42RR and 42RL, each provided with a linear solenoid and a spring, are each open when power is not being applied to the solenoid, and the opening degree thereof is adjusted in proportion to the electric current supplied to their respective solenoids. The rear-wheel-side pressure reducing valves 42RR and 42RL are each closed when the electric current has exceeded a predetermined current level which is set in relation to the wheel cylinder pressure. The pressure reducing valves 42RR and 42RL are each disposed so that the differential pressure between the wheel cylinder pressure on the upstream side and the reservoir pressure (atmospheric pressure) on the downstream side works as a force to open them. Hereinbelow, the pressure reducing valves 42FR to 42RL will be generically referred to as "pressure reducing valve 42" or "pressure reducing valves 42" as appropriate.

Wheel cylinder pressure sensors 44FR, 44FL, 44RR and 44RL, which detect the wheel cylinder pressure, or the pressure of brake fluid working on their corresponding wheel cylinders 20, are disposed in the vicinity of the wheel cylinders 20FR to 20RL for the right front wheel, the left front wheel, the right rear wheel and the left rear wheel, respectively. Hereinbelow, the wheel cylinder pressure sensors 44FR to 44RL will be generically referred to as "wheel cylinder pressure sensor 44" or "wheel cylinder pressure sensors 44" as appropriate.

The brake actuator 80 is controlled by an electronic control unit (hereinafter referred to as "ECU") 200 which serves as a control unit in the present embodiment. The brake ECU 200 includes a CPU for performing various arithmetic processings, a ROM for storing various control programs, a RAM used as a work area for data storage and program execution, an I/O interface, a memory, and so forth.

The brake control apparatus 10 configured as described above can carry out the regenerative-cooperative braking control. The brake control apparatus 10 starts a braking operation upon receipt of a request for braking. A request for braking is turned on when a braking force must be applied to the vehicle, such as when the driver has operated the brake pedal 12. Upon receipt of the braking request, the brake ECU 200 calculates a target deceleration, namely a required braking force, from the pedal stroke of the brake pedal 12 and the master cylinder pressure. The brake ECU 200 calculates a required fluid pressure braking force, which is a braking force to be generated by the brake control apparatus 10, by subtracting a regenerative braking force from the required braking force. Note here that the value of the regenerative braking force is supplied to the brake control apparatus 10 from a higher-level hybrid ECU (not shown). Then the brake ECU 200 calculates a target fluid pressure of the wheel cylinders 20FR to 20RL based on the calculated required fluid pressure braking force. The brake ECU 200 determines the values of control current to be supplied to the pressure increasing valves 40 and the pressure reducing valves 42 by feedback control such that the wheel cylinder pressure becomes the target fluid pressure. The brake ECU 200 carries out the calculation of target deceleration and target fluid pressure and the control of control valves repeatedly on a predetermined cycle during braking.

As a result, in the brake control apparatus 10, brake fluid is supplied to the respective wheel cylinders 20 from the accumulator 50 through the pressure increasing valves 40, and thus a desired braking force is applied to the wheels. Also, the brake fluid is discharged as needed from each of the wheel cylinders 20 through the pressure reducing valves 42, thereby adjusting the braking force to be applied to the wheels. In this manner, braking force control by a so-called brake-by-wire system is performed. In the present embodiment, a wheel cylinder pressure control system is comprised of the accumulator 50, the pressure increasing valves 40, the pressure reducing valves 42, and so forth.

On the other hand, the right master cut valve 27FR and the left master cut valve 27FL at this time are normally set in a closed state. During a regenerative-cooperative braking control, a differential pressure corresponding to the magnitude of regenerative braking force works between the upstream and the downstream of the master cut valves 27. The brake fluid sent out from the master cylinder 14 as the brake pedal 12 is pressed by the driver will flow into the stroke simulator 24. This will create a proper pedal reaction force.

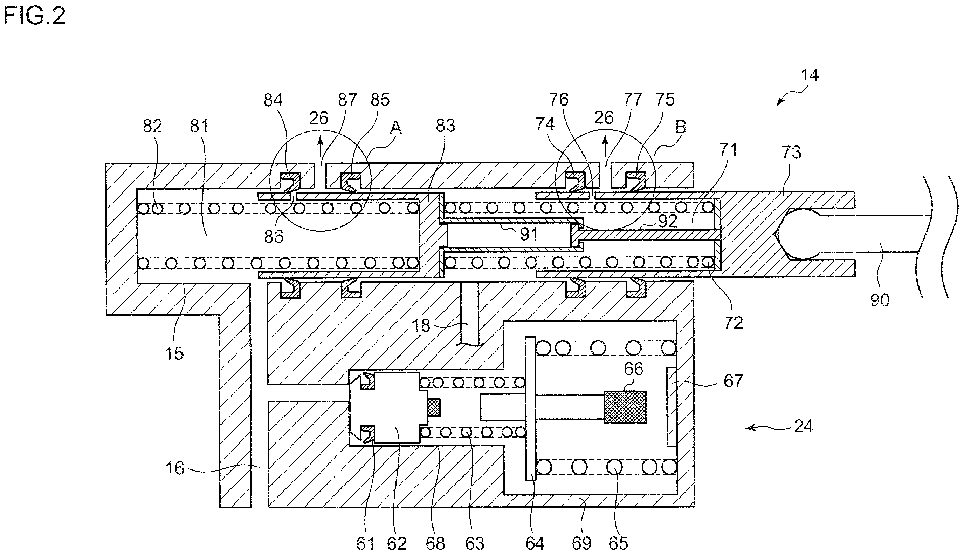

FIG. 2 is a schematic cross-sectional view of the master cylinder 14 and the stroke simulator 24 shown in FIG. 1. While FIG. 2 shows, as an example, the master cylinder 14 and the stroke simulator 24 structured integrally together, they may be structured separately from each other. FIG. 2 is a cross-sectional view cutting the master cylinder 14 and the stroke simulator 24 along a plane passing through the central axis.

The master cylinder 14 is a tandem type having two independent hydraulic systems, so that even when one of the systems develops a trouble, the remaining one will perform a braking operation. The master cylinder 14 includes a cylinder 15 extending horizontally in FIG. 2 and two pistons 73 and 83. The second piston 83 is housed completely inside the cylinder 15. The first piston 73 is disposed on the opening side of the cylinder 15, and a part thereof is positioned outside the cylinder 15. A rod 90 is connected to the right end of the first piston 73. The other end of the rod 90 is connected to the brake pedal 12 which the driver operates, and the rod 90 moves horizontally in FIG. 2 in response to the pedal operation of the driver. The first piston 73 and the second piston 83, which are both cylinders open at one end and bottomed at the other, are inserted in the cylinder 15 in such a manner that they can be displaced in the axial direction thereof. Note that FIG. 2 shows the positions of the first piston 73 and the second piston 83 when the driver has removed his/her foot completely from the brake pedal 12. Hereinafter, the positions of the pistons at this time will be called "initial positions" .

The interior of the cylinder 15 is divided into a first fluid pressure chamber 71 and a second fluid pressure chamber 81. The first fluid pressure chamber 71 is defined by the bottoms of the first piston 73 and the second piston 83 and the side wall of the cylinder 15, whereas the second fluid pressure chamber 81 is defined by the bottom of the second piston 83 and the side wall and bottom wall of the cylinder 15. A first fluid pressure chamber spring 72 is housed in the first fluid pressure chamber, and a second fluid pressure chamber spring 82 in the second fluid pressure chamber. The first fluid pressure chamber spring 72 and the second fluidpressure chamber spring 82 are housed therein, compressed by the respectively predetermined lengths. The second piston 83 is supported by the springs 72 and 82 on both sides.

Also disposed in the first fluid pressure chamber 71 is a restricting structure coupling the first piston 73 to the second piston 83. The restricting structure is constituted by a first member 91 and a second member 92. The first member 91 is a tubular member extending from the bottom of the second piston 83 in the direction of the first piston and has a bottom with a hole in the center at the end opposite to the second piston. The second member 92 is a rod-like member extending from the bottom of the first piston 73 in the open end direction, and it is not only inserted in the hole in the bottom of the first member 91 but also has a nailhead-shaped flange to ensure the engagement thereof with the first member 91. Thus, the restricting structure, which is constituted by the first member 91 and the second member 92, restricts the compression of the spring 72 in the first fluid pressure chamber to a predetermined length even when the brake pedal is not being pressed and prevents the first piston 73 from being pushed out of the cylinder 15. Although not shown, a structure for restricting the compression of the spring 82 in the second fluid pressure chamber to a predetermined length is also provided in the cylinder 15.

The side wall of the cylinder 15 has annular grooves formed in four positions thereof wherein each annular groove is a substantially rectangular-shaped recess in cross section. Two of the annular grooves are located in positions opposite to the cylindrical part of the second piston 83, and cups 84 and 85 are fitted in the annular grooves. The remaining two of the annular grooves are located in positions opposite to the cylindrical part of the first piston 73, and cups 74 and 75 are fitted in the annular grooves. These cups made of an elastic material such as rubber are formed in a ring shape, and tongue-shaped portions extending inward are in contact with the cylindrical part of the piston. When the pistons 73 and 83 move, the tongue-shaped portions of the cups, which slide on the cylindrical parts of the pistons, perform the role of seals preventing the communication of brake fluid.

The first fluid pressure chamber 71 communicates with the wheel cylinder 20FL of the left front wheel through the brake hydraulic control pipe 18. Also, the second fluid pressure chamber 81 communicates with the wheel cylinder 20FR of the right front wheel through the brake hydraulic control pipe 16. As described above, the master cut valves 27 are provided at a midway point of the brake hydraulic control pipes 16 and 18 , respectively, and they cut off the communication with the wheel cylinders under normal conditions. When the accumulator or the like is at fault, the master cut valves open to communicate the first fluid pressure chamber 71 and the second fluid pressure chamber 81 of the master cylinder 14 with the wheel cylinders, so that a pressure is generated in the wheel cylinders in response to the operation of the brake pedal 12.

Also, the first fluid pressure chamber 71 and the second fluid pressure chamber 81 are provided with return passages 77 and 87 to communicate with the reservoir tank 26. Further, communicating holes 76 and 86 are formed in the cylindrical parts of the first piston 73 and the second piston 83, respectively, and they have a function of communicating the first fluid pressure chamber 71 or the second fluid pressure chamber 81 with the reservoir tank 26 under predetermined conditions. Held in the reservoir tank 26 is a predetermined volume of brake fluid, and the brake fluid can be sent into or sent back from the first fluid pressure chamber and the second fluid pressure chamber as necessary.

The brake hydraulic control pipe 16 communicates with the stroke simulator 24 also. Note that the simulator cut valve 23 is omitted in FIG. 2. The stroke simulator 24 includes a first-stage cylinder 68 and a second-stage cylinder 69, which have different sectional areas from each other. A first-stage piston 62 is disposed inside the first-stage cylinder 68, and a second-stage piston 64 inside the second-stage cylinder 69. The first-stage piston 62 is approximately a cylinder in shape, and the second-stage piston 64 is of a structure combining an elongated cylinder extending along the center axis of the cylinder with a circular disc halfway thereon.

A first-stage spring 63 is housed between the first-stage piston 62 and the second-stage piston 64, and a second-stage spring 65 is housed between the second-stage piston 64 and the bottom of the second-stage cylinder 69, both compressed by their respectively predetermined lengths. The first-stage piston 62 has an annular groove formed around its perimeter, and an approximately ring-shaped cap 61 is fitted therein, thereby providing a seal between the brake hydraulic control pipe 16 and the first-stage cylinder 68.

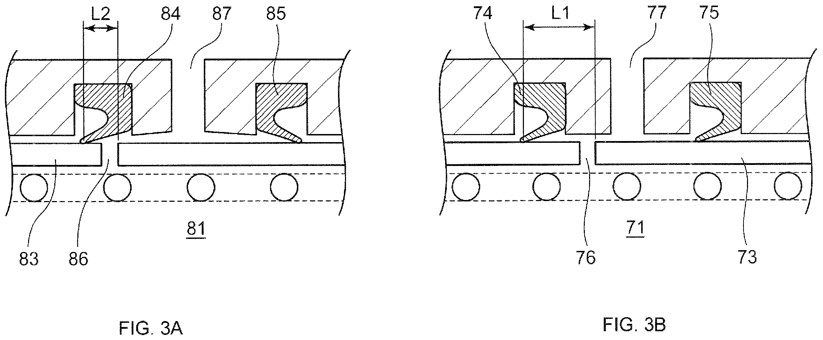

FIGS. 3A and 3B are enlarged views of vicinities A and B of return passages shown in FIG. 2, respectively. The first piston 73 and the second piston 83 are in their initial positions. In FIG. 3A, the tip of the tongue-shaped portion of the cup 84 abuts on the cylindrical wall of the second piston 83 on the left of the communicating hole 86. In the shown positional relationship, the second fluid pressure chamber 81 of the master cylinder is in communication with the reservoir tank 26 through the communicating hole 86 and the return passage 87. The distance between the right side of the communicating hole 86 and the abutment point of the cup 84 and the cylindrical wall is called an idle stroke L2. The idle stroke represents the length of stroke the second piston 83 needs to move in order to terminate the communication between the second fluid pressure chamber 81 of the master cylinder and the reservoir tank 26. In other words, when the second piston 83 is displaced for a length of L2 leftward in FIG.3A, the communication between the communicating hole 86 and the return passage 87 is blocked by the cup 84, and consequently the communication between the second fluid pressure chamber 81 and the reservoir tank 26 is also blocked.

Similarly, in FIG. 3B, the tip of the tongue-shaped portion of the cup 74 abuts on the cylindrical wall of the first piston 73 on the left of the communicating hole 76. In the shown positional relationship, the first fluid pressure chamber 71 of the master cylinder is in communication with the reservoir tank 26 through the communicating hole 76 and the return passage 77. The distance between the right side of the communicating hole 76 and the abutment point of the cup 74 and the cylindrical wall is called an idle stroke L1. Ina similar manner as described above, when the first piston 73 is displaced for a length of L1 leftward in FIG. 3B, the communication between the communicating hole 76 and the return passage 77 is blocked by the cup 74, and consequently the communication between the first fluidpressure chamber 71 and the reservoir tank26isalsoblocked.

In the present embodiment, the idle stroke L1 of the first fluid pressure chamber and the idle stroke L2 of the second fluid pressure chamber are set so that they satisfy a relationship L1 > L2. As an example, L1 can be about 1.5 mm, and L2 is less than 1 mm.

As will be discussed later, the presence of an idle stroke in the second fluid pressure chamber results in a change in the pedaling pressure during the pressing of the brake pedal, which can give the driver an awkward feeling. However, since the pressures in the first fluid pressure chamber and the second fluid pressure chamber must be returned to the initial conditions when the brake pedal is released (to prevent "dragging" by zeroing the wheel cylinder pressure), there needs to be an idle stroke to provide communication with the reservoir tank. Hence, it is desirable that the idle stroke L2 is as small as practicable.

Referring back to FIG. 2, the set load of the first fluid pressure chamber spring 72 is set larger than the set load of the second fluid pressure chamber spring 82. To be more specific, the set loads of the first fluid pressure chamber spring 72 and the second fluid pressure chamber spring 82 and the set load of the spring of the stroke simulator are determined as follows. That is, they are determined such that before a pedal input load transmitted via the rod 90 prevails against the set load of the first fluid pressure chamber spring 72 and the first piston begins moving to reduce the capacity of the first fluid pressure chamber, the first piston 73 moves more than the idle stroke L1 in relation to the cup 74.

Operations of the master cylinder 14 and the stroke simulator 24 configured as described above will be explained below.

In the initial positions shown in FIG. 2, both the first fluid pressure chamber 71 and the second fluid pressure chamber 81 communicate with the reservoir tank 26 through the return passages 77 and 87, respectively.

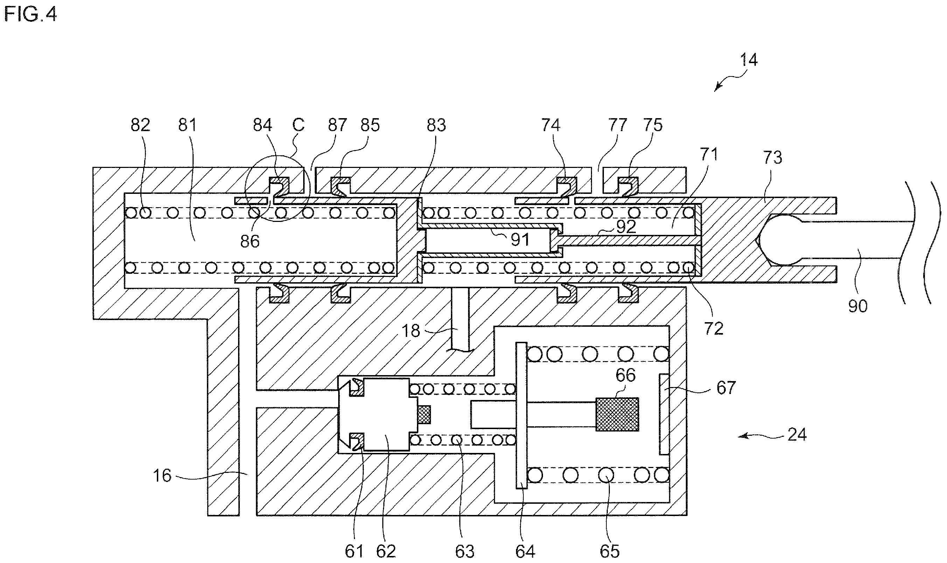

FIG. 4 shows the master cylinder 14 at a point of time when the driver starts to step on the brake pedal 12. As the pedal stepping force is transmitted through the rod 90, the second fluid pressure chamber spring 82 first starts to compress and then the second piston 83 is displaced leftward in FIG. 4. This is because the set load of the second fluid chamber spring 82 is smaller than that of the first fluid pressure chamber spring 72. At this time, the first fluid pressure chamber spring 72 does not compress. Besides, the relative distance between the first piston 73 and the second piston 83 remains unchanged and therefore the first piston 73 and the second piston 83 are displaced in an almost integratedmanner. If in this state the secondpiston 83 is displaced by the distance L2, the communication between the second fluid pressure chamber 81 and the reservoir tank 26 is blocked by the cup 84 as illustrated by a vicinity C in FIG. 4. During this time, the volume of the first fluid chamber 71 does not change, and therefore the brake feeling through the brake pedal 12 is not affected thereby.

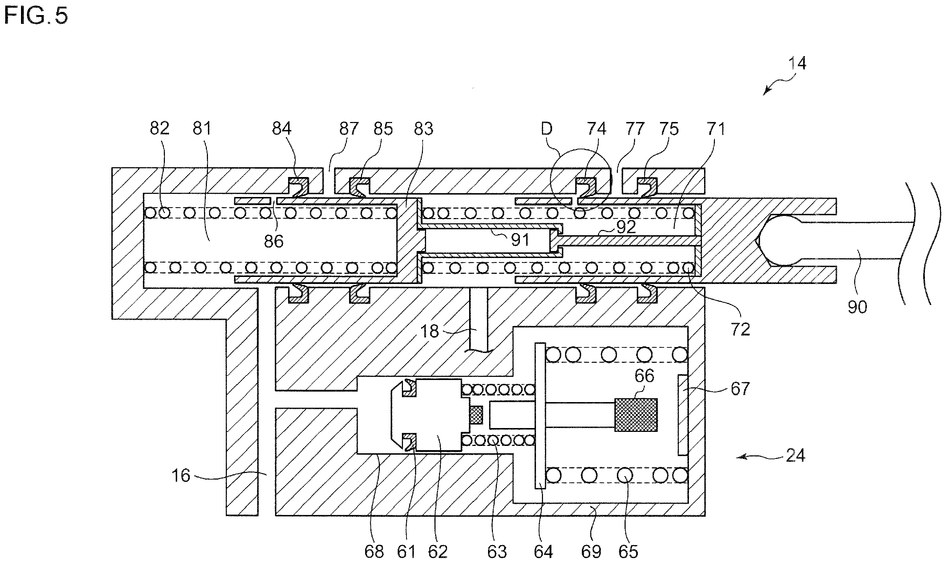

FIG. 5 shows the master cylinder 14 at a point of time when the brake pedal 12 is pressed further. As the communication between the second fluid chamber 81 and the reservoir tank 26 terminates, the brake fluid is sent to the first-stage cylinder 68 of the stroke simulator 24 through the brake hydraulic control pipe 16. As a result, the first-stage piston 62 moves rightward within the cylinder in FIG. 5. Here, the set load of the first fluid pressure chamber spring 72 in the master cylinder is set higher than the sum of the set load of the first-stage spring of the stroke simulator and the set load of the second fluid pressure chamber spring. Thus, while the first fluid pressure chamber spring 72 does not compress, both the first piston 73 and the second piston 83 move integrally together and are further displaced by the idle stroke L1. Consequently, as shown by a vicinity D in FIG. 5, the communication between the first fluid pressure chamber 71 and the reservoir tank 26 is blocked by the cup 74.

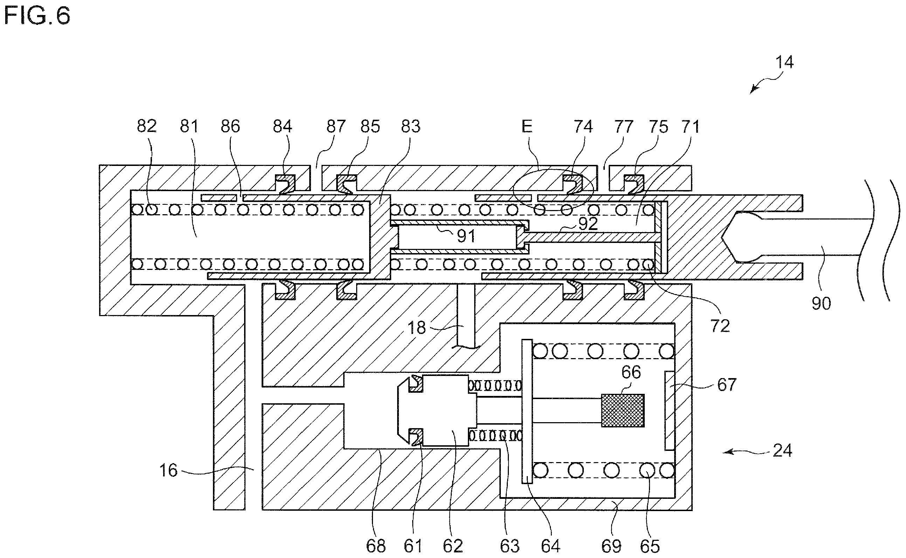

FIG. 6 shows the master cylinder 14 at a point of time when the brake pedal 12 is pressed further than it is in FIG. 5. The brake fluid is sent from the second fluid pressure chamber 81 to the first-stage cylinder 68 of the stroke simulator 24, which in turn moves the first-stage piston 62. Then the second-stage piston 64 starts its stroke. At this point, the first piston of the master cylinder 14 receives a pedal load that exceeds the set load of the first fluid pressure chamber spring 72. However, the first fluid pressure chamber is no longer communicated with the reservoir tank, so that no substantial change in volume of the first fluid pressure chamber occurs.

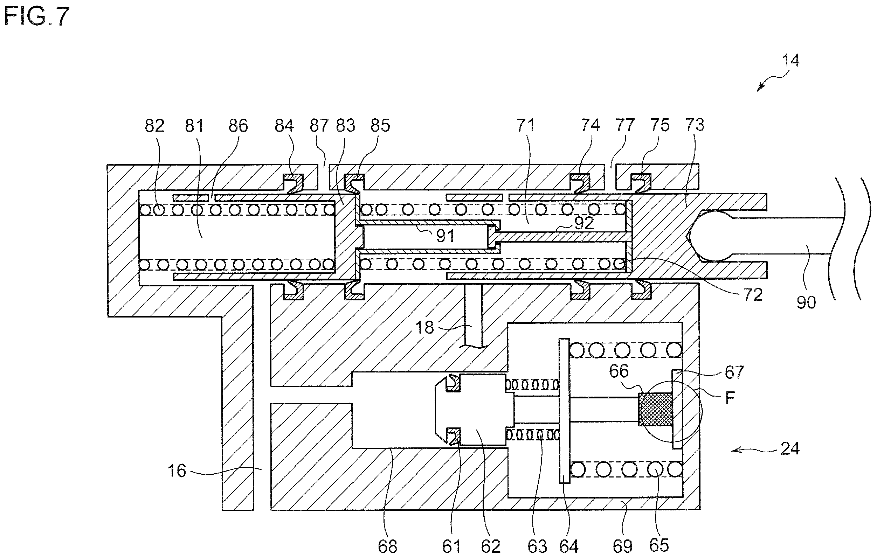

When, in FIG. 7, the brake pedal 12 is pressed further than it is in FIG. 6, a tip part 66 of the second-stage piston 64 in the stroke simulator 24 abuts on a stopper 67 on the bottom of the cylinder. At this point, the displacement of the stroke simulator ends.

As the driver releases the brake pedal 12, the first piston 73 and the second piston 83 are returned to the initial positions by the first fluid pressure chamber spring 72 and the second fluid pressure chamber spring 82. Similarly, in the stroke simulator 24, the first-stage piston 62 and the second-stage piston 64 are returned to the initial positions by the first-stage spring 63 and the second-stage spring 65. The communication between the first liquid pressure chamber 71 and the reservoir tank 26 and the communication between the second liquid pressure chamber 81 and the reservoir tank 26 are restored, so that the brake fluid is returned to the reservoir tank.

As described above, according to the present embodiment, the idle stroke L2 of the second fluid pressure chamber to which the stroke simulator is connected is set smaller than the idle stroke L1 of the first fluid pressure chamber. And when the second piston is first displaced after the start of a pedal stroke, the brake fluid pressure is transmitted from the second fluid pressure chamber to the stroke simulator in a short time because the idle stroke L2 is small. Hence, the reaction force generated by the stroke simulator can be transmitted to the brake pedal from an early stage of pedal stroke, so that pedal feeling can be improved. Also, even if the stroke sensor malfunctions and the braking force must be generated based only on the value of the master cylinder pressure sensor, the master cylinder pressure will rise in a short time because the idle stroke L2 is short. As a result, the braking force can be generated quickly. Furthermore, the idle stroke is shorter and therefore the master cylinder can be made correspondingly smaller in size.

In the assembly of a master cylinder, the general practice is that the second piston is first inserted in the cylinder. In contrast, according to the present embodiment, it suffices if only the idle stroke of the second fluid pressure chamber is strictly adjusted at the time of assembly. As a result, the dimensional control and inspection of the idle stroke L1 of the first fluid pressure chamber can be skipped. This is because L2 only is responsible for the brake feeling and the precise adjustment is not required as long as the relationship L2 < L1 is met.

In the master cylinder according to the present embodiment, the set load of the first fluid pressure chamber spring is set higher than the set loads of the other springs. Thus, the present embodiment has an advantage of reduced abnormal noise that may be caused when the brake pedal is returned. This advantageous aspect thereof will be discussed as follows.

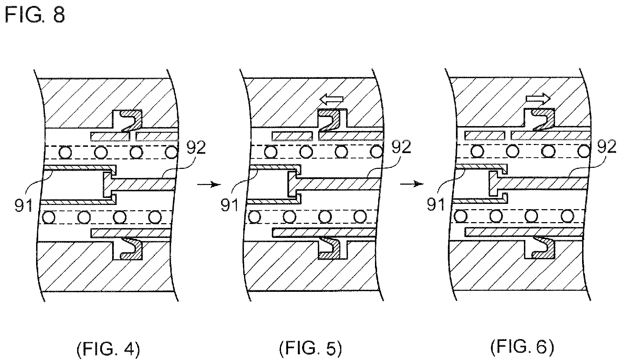

FIG. 8 shows enlarged views of the vicinities of the restricting structures shown in FIG. 4 to FIG. 6, respectively. As described above, the master cylinder 14 according to the present embodiment has the restricting structure that couples the first piston 73 to the second piston 83. At a point of time shown in FIG. 4, the set load of the second fluid chamber spring 82 is smaller than that of the first fluid chamber spring 72, so that the second fluid chamber spring 82 first starts to compress and the second piston 83 is displaced leftward in FIG.4. At this time, the first fluid pressure chamber spring 72 does not compress and therefore the first piston 73 and the second piston 83 are displaced in an integrated manner. As a result, no gap is created between the bottom of the first member 91 and the flange of the second member 92 in the restricting structure, and the restricting structure itself moves leftward.

Then, also at a point of time shown in FIG. 5, while the first fluid pressure chamber spring 72 does not compress, both the first piston 73 and the second piston 83 move integrally together. Thus, at this time, no gap is created between the bottom of the first member 91 and the flange of the second member 92 in the restricting structure, and the restricting structure itself moves leftward.

Further, also at a point of time shown in FIG. 6, the first fluid pressure chamber has already not been communicated with the reservoir tank. As a result, the volume of the first fluid pressure chamber does not vary much and the gap between the bottom of the first member 91 and the flange of the second member 92 in the restricting structure does not become wide.

As the driver removes his/her foot from the brake pedal, the first piston 73 and the second piston 83 start moving rightward within the cylinder. At this time, if the gap between the bottom of the first member 91 and the flange of the second member 92 in the structuring structure is wide, a large hitting sound will be produced when the first piston 73 is returned to the initial position. However, since the first member and the second member are disposed very close to each other in the present embodiment, no large hitting sound is produced.

In the embodiment, a description has been given of a structure where the second fluid pressure chamber of the master cylinder communicates with the stroke simulator. Instead, the stroke simulator may communicate with the first fluid pressure chamber of the master cylinder. In such a case, it is preferable that the relationship between the idle stroke L1 of the first fluid pressure chamber and the idle stroke L2 of the second fluid pressure chamber is L1 < L2. And it is also desirable that the set load of the first fluid pressure chamber spring is set smaller than that of the second fluidpressure chamber spring. By setting L1 and L2 and the set loads thereof accordingly, when the first piston is first displaced after the start of a pedal stroke, the brake fluid pressure is transmitted from the first fluid pressure chamber to the stroke simulator in a short time because the idle stroke L1 is small. Hence, similar to the above-described embodiment, the reaction force generated by the stroke simulator can be transmitted to the brake pedal from an early stage of pedal stroke, so that pedal feeling can be improved.

In the embodiment, a description has been given of a case where the idle strokes are set in both the first fluid pressure chamber and the second fluid pressure chamber. However, the idle stroke may be set to zero in the fluid pressure chamber connected to the stroke simulator; that is, one of the communication holes may be eliminated. As a result, the stroke simulator can be operated immediately after the start of a pedal stroke.

In the embodiment, a description has been given of an example where the linear pressure increasing valve 40 and the linear pressure reducing valve 42 are provided for each wheel cylinder. At the same time, a master cylinder structure according to the embodiment may be used for a brake actuator in a modification.

The present invention has been described by referring to the embodiments and such description is for illustrative purposes only. It is understood by those skilled in the art that any arbitrary combinations of the embodiments and any arbitrary combinations of the constituting elements and processes could be developed as modifications and that such modifications are also within the scope of the present invention.

The present invention is not limited to the above-described embodiments only, and various modifications such as changes in design may be added to the embodiments based on their knowledge. The structure shown for each Figure is for illustrative purposes only and may be changed, as appropriate, as long as the similar functions can be attained.

### Industrial applicability

By employing the present invention, the effects in the initial phase of pedal stroke due to the presence of idle stroke is reduced in the master cylinder that constitutes a by-wire brake system.

## Claims

1. A braking control apparatus (10) comprising:
a master cylinder (14), the master cylinder including:
a first piston (73) coupled to a brake pedal (12) and configured to be displaced in response to a brake operation;
a second piston (83) movable in linkage with the first piston (73);
a cylinder (15) for housing the first piston (73) and the second piston (83) slidably in an axial direction;
a first fluid pressure chamber (71) defined by the first piston (73) and the second piston (83), having a passage (77) communicating with a reservoir tank (26) for storing brake fluid, and configured to generate a fluid pressure when communication with the reservoir tank (26) is blocked at displacement of the first piston (73) by a first stroke;
a second fluid pressure chamber (81) defined by the second piston (83) and a side wall of the cylinder (15), having a passage (87) communicating with the reservoir tank (26), and configured to generate a fluid pressure when communication with the reservoir tank (26) is blocked at displacement of the second piston (83) by a second stroke;
a first fluid pressure line (18) connecting the first fluid pressure chamber (71) to a wheel cylinder provided on a first wheel; and
a second fluid pressure line (16) connecting the second fluid pressure chamber (81) to a wheel cylinder provided on a second wheel; and
a stroke simulator (24) configured to communicate with the fluid pressure chamber being subject to the smaller of the first stroke and the second stroke and configured to generate a reaction force in the brake pedal when the brake is operated,
**characterised in that**
the fluid pressure chamber to which the stroke simulator is connected when the brake pedal is operated generates a fluid pressure before the other fluid pressure chamber.

2. The braking control apparatus (10) according to claim 1, wherein the second stroke is smaller than the first stroke,
the stroke simulator is configured to communicate with the second fluid pressure chamber (81)
wherein the second piston (83) is so configured as to be displaced as far as the second stroke before the first piston (73) is displaced as far as the first stroke when the brake pedal is operated.

3. The braking control apparatus (10) according to Claim 2, further comprising:
a first return spring (72), disposed inside the first fluid pressure chamber (71), for biasing the first piston (73) toward an initial position when brake pedal operation is canceled; and
a second return spring (82), disposed inside the second fluid pressure chamber (81), for biasing the second piston (83) toward an initial position when brake pedal operation is canceled;
wherein a biasing force exerted by the second return spring (82) at displacement of the second piston (83) by a second stroke from the initial position is set smaller than a biasing force exerted by the first return spring (72).

4. The braking control apparatus (10) according to Claim 2, wherein the first piston (73) and the second piston (83) are coupled to each other and wherein a structure for restricting the second piston (83) from moving apart from the first piston (73) by more than a predetermined distance is provided in the first fluid pressure chamber (71).

5. The braking control apparatus (10) according to claim 1, wherein:
the stroke simulator is configured to communicate with the first fluid pressure chamber (71)
wherein the first piston (73) is so configured as to be displaced first when the brake pedal is operated.

6. The braking control apparatus (10) according to Claim 5, further comprising:
a first return spring (72), disposed inside the first fluid pressure chamber (71), for biasing the first piston (73) toward an initial position when brake pedal operation is canceled; and
a second return spring (82), disposed inside the second fluid pressure chamber (81), for biasing the second piston (83) toward an initial position when brake pedal operation is canceled,
wherein a biasing force exerted by the first return spring (72) at displacement of the first piston (73) by a first stroke from the initial position is set smaller than a biasing force exerted by the second return spring (82).

7. The braking control apparatus (10) according to claim 1, wherein
the stroke simulator is configured to communicate with the first fluid pressure chamber (71)
the braking control apparatus (10) further comprising:
a first return spring (72), disposed inside the first fluid pressure chamber (71), for biasing the first piston (73) toward an initial position when brake pedal operation is canceled; and
a second return spring (82), disposed inside the second fluid pressure chamber (81), for biasing the second piston (83) toward an initial position when brake pedal operation is canceled,
wherein a biasing force exerted by the second return spring (82) at displacement of the second piston (83) by a second stroke from the initial position is set smaller than a biasing force exerted by the first return spring (72).

8. The braking control apparatus (10) according to claim 1, wherein
the stroke simulator is configured to communicate with the first fluid pressure chamber (71)
the braking control apparatus (10) further comprising:
a first return spring (72), disposed inside the first fluid pressure chamber (71), for biasing the first piston (73) toward an initial position when brake pedal operation is canceled; and
a second return spring (82), disposed inside the second fluid pressure chamber (81), for biasing the second piston (83) toward an initial position when brake pedal operation is canceled,
wherein a biasing force exerted by the first return spring (72) at displacement of the first piston (73) by a first stroke from the initial position is set smaller than a biasing force exerted by the second return spring (82).

## Patentansprüche

1. Bremssteuervorrichtung (10), mit:
einem Hauptbremszylinder (14), der aufweist:
einen ersten Kolben (73), der an ein Bremspedal (12) gekoppelt und so konfiguriert ist, dass er bei einer Bremsbetätigung verschoben wird;
einen zweiten Kolben (83), der zusammen mit dem ersten Kolben (73) verschiebbar ist;
einen Zylinder (15) zur in Axialrichtung verschiebbaren Unterbringung des ersten Kolbens (73) und des zweiten Kolbens (83);
eine durch den ersten Kolben (73) und den zweiten Kolben (83) definierte erste Fluiddruckkammer (71), die eine Passage (77) aufweist, die mit einem Vorratstank (26) zur Lagerung von Bremsflüssigkeit in Verbindung steht, und so konfiguriert ist, dass sie einen Fluiddruck erzeugt, wenn bei Verschiebung des ersten Kolbens (73) um einen ersten Hub die Verbindung zum Vorratstank (26) getrennt ist;
eine durch den zweiten Kolben (83) und eine Seitenwand des Zylinders (15) definierte zweite Fluiddruckkammer (81), die eine Passage (87) aufweist, die mit dem Vorratstank (26) in Verbindung steht, und so konfiguriert ist, dass sie einen Fluiddruck erzeugt, wenn bei Verschiebung des zweiten Kolbens (83) um einen zweiten Hub die Verbindung zum Vorratstank (26) getrennt ist;
eine erste Fluiddruckleitung (18), die die erste Fluiddruckkammer (71) mit einem an einem ersten Rad vorgesehenen Radbremszylinder verbindet; und
eine zweite Fluiddruckleitung (16), die die zweite Fluiddruckkammer (81) mit einem an einem zweiten Rad vorgesehenen Radbremszylinder verbindet; und
einem Hubsimulator (24), der so konfiguriert ist, dass er in Verbindung mit der Fluiddruckkammer steht, die den kleineren des ersten und zweiten Hubs erfährt und bei Betätigung der Bremse am Bremspedal eine Reaktionskraft erzeugt,
**dadurch gekennzeichnet, dass**
die Fluiddruckkammer, mit der der Hubsimulator bei Betätigung des Bremspedals verbunden ist, vor der anderen Fluiddruckkammer den Fluiddruck erzeugt.

2. Bremssteuervorrichtung (10) nach Anspruch 1, wobei der zweite Hub kleiner ist als der erste Hub,
der Hubsimulator so konfiguriert ist, dass er in Verbindung mit der zweiten Fluiddruckkammer (81) steht
wobei der zweite Kolben (83) so konfiguriert ist, dass er bei Betätigung des Bremspedals um den zweiten Hub verschoben ist, bevor der erste Kolben (73) um den ersten Hub verschoben ist.

3. Bremssteuervorrichtung (10) nach Anspruch 2, zusätzlich mit:
einer in der ersten Fluiddruckkammer (71) angeordneten ersten Rückstellfeder (72), die den ersten Kolben (73) in Richtung seiner Ausgangsstellung bringt, wenn die Bremspedalbetätigung beendet wird; und
einer in der zweiten Fluiddruckkammer (81) angeordneten zweiten Rückstellfeder (82), die den zweiten Kolben (83) in Richtung seiner Ausgangsstellung bringt, wenn die Bremspedalbetätigung beendet wird;
wobei die von der zweiten Rückstellfeder (82) ausgeübte Rückstellkraft bei Verschiebung des zweiten Kolbens (83) von der Ausgangsstellung um den zweiten Hub kleiner ist als die von der ersten Rückstellfeder (72) ausgeübte Rückstellkraft.

4. Bremssteuervorrichtung (10) nach Anspruch 2, wobei der erste Kolben (73) und der zweite Kolben (83) aneinander gekoppelt sind und wobei in der ersten Fluiddruckkammer (71) eine Struktur vorgesehen ist, die verhindert, dass sich der zweite Kolben (83) um mehr als einen vorgegebenen Abstand vom ersten Kolben (73) weg bewegt.

5. Bremssteuervorrichtung (10) nach Anspruch 1, wobei
der Hubsimulator so konfiguriert ist, dass er mit der ersten Fluiddruckkammer (71) in Verbindung steht
wobei der erste Kolben (73) so konfiguriert ist, dass er bei Betätigung des Bremspedals zuerst verschoben wird.

6. Bremssteuervorrichtung (10) nach Anspruch 5, zusätzlich mit:
einer in der ersten Fluiddruckkammer (71) angeordneten ersten Rückstellfeder (72), die den ersten Kolben (73) in Richtung seiner Ausgangsstellung bringt, wenn die Bremspedalbetätigung beendet wird; und
einer in der zweiten Fluiddruckkammer (81) angeordneten zweiten Rückstellfeder (82), die den zweiten Kolben (83) in Richtung seiner Ausgangsstellung bringt, wenn die Bremspedalbetätigung beendet wird,
wobei die von der ersten Rückstellfeder (72) ausgeübte Rückstellkraft bei Verschiebung des ersten Kolbens (73) von der Ausgangsstellung um den ersten Hub kleiner ist als die von der zweiten Rückstellfeder (82) ausgeübte Rückstellkraft.

7. Bremssteuervorrichtung (10) nach Anspruch 1, wobei
der Hubsimulator so konfiguriert ist, dass er mit der ersten Fluiddruckkammer (71) in Verbindung steht
die Bremssteuervorrichtung (10) zusätzlich aufweist:
eine in der ersten Fluiddruckkammer (71) angeordnete erste Rückstellfeder (72), die den ersten Kolben (73) in Richtung seiner Ausgangsstellung bringt, wenn die Bremspedalbetätigung beendet wird; und
eine in der zweiten Fluiddruckkammer (81) angeordnete zweite Rückstellfeder (82), die den zweiten Kolben (83) in Richtung seiner Ausgangsstellung bringt, wenn die Bremspedalbetätigung beendet wird,
wobei die von der zweiten Rückstellfeder (82) ausgeübte Rückstellkraft bei Verschiebung des zweiten Kolbens (83) von der Ausgangsstellung um den zweiter Hub kleiner ist als die von der ersten Rückstellfeder (72) ausgeübte Rückstellkraft.

8. Bremssteuervorrichtung (10) nach Anspruch 1, wobei
der Hubsimulator so konfiguriert ist, dass er mit der ersten Fluiddruckkammer (71) in Verbindung steht
die Bremssteuervorrichtung (10) zusätzlich aufweist:
eine in der ersten Fluiddruckkammer (71) angeordnete erste Rückstellfeder (72), die den ersten Kolben (73) in Richtung seiner Ausgangsstellung bringt, wenn die Bremspedalbetätigung beendet wird; und
eine in der zweiten Fluiddruckkammer (81) angeordnete zweite Rückstellfeder (82), die den zweiten Kolben (83) in Richtung seiner Ausgangsstellung bringt, wenn die Bremspedalbetätigung beendet wird,
wobei eine von der ersten Rückstellfeder (72) ausgeübte Rückstellkraft bei Verschiebung des ersten Kolbens (73) von der Ausgangsstellung um den ersten Hub kleiner ist als eine von der zweiten Rückstellfeder (82) ausgeübte Rückstellkraft.

## Revendications

1. Appareil de commande de freinage (10) comprenant :
un maître-cylindre (14), le maître-cylindre comprenant :
un premier piston (73) couplé à une pédale de frein (12) et configuré pour être déplacé en réponse à une opération de freinage ;
un second piston (83) mobile en liaison avec le premier piston (73) ;
un cylindre (15) pour loger le premier piston (73) et le second piston (83) de manière coulissante dans une direction axiale ;
une première chambre de pression de fluide (71) définie par le premier piston (73) et le second piston (83), ayant un passage (77) communiquant avec un réservoir (26) pour stocker le liquide de frein, et configuré pour générer une pression de fluide lorsque la communication avec le réservoir (26) est empêchée, lors du déplacement du premier piston (73) par une première course ;
une seconde chambre de pression de fluide (81) définie par le second piston (83) et une paroi latérale du cylindre (15), ayant un passage (87) communiquant avec le réservoir (26), et configuré pour générer une pression de fluide lorsque la communication avec le réservoir (26) est empêchée lors du déplacement du second piston (83) par une seconde course ;
une première conduite de pression de fluide (18) raccordant la première chambre de pression de fluide (71) à un cylindre de roue prévu dans une première roue ; et
une seconde conduite de pression de fluide (16) raccordant la seconde chambre de pression de fluide (81) à un cylindre de roue prévu sur une seconde roue ; et
un simulateur de course (24) configuré pour communiquer avec la chambre de pression de fluide qui est soumise à la plus petite course parmi la première course et la seconde course et configuré pour générer une force de réaction dans la pédale de frein lorsque le frein est actionné,
**caractérisé en ce que** :
la chambre de pression de fluide à laquelle le simulateur de course est raccordé lorsque la pédale de frein est actionnée, génère une pression de fluide avant l'autre chambre de pression de fluide.

2. Appareil de commande de freinage (10) selon la revendication 1, dans lequel la seconde course est inférieure à la première course ;
le simulateur de course est configuré pour communiquer avec la seconde chambre de pression de fluide (81),
dans lequel le second piston (83) est configuré afin d'être déplacé aussi loin que la seconde course avant que le premier piston (73) ne soit déplacé aussi loin que la première course lorsque la pédale de frein est actionnée.

3. Appareil de commande de freinage (10) selon la revendication 2, comprenant en outre :
un premier ressort de rappel (72) disposé à l'intérieur de la première chambre de pression de fluide (71) pour solliciter le premier piston (73) vers une position initiale lorsque l'actionnement de pédale de frein est annulé ; et
un second ressort de rappel (82) disposé à l'intérieur de la seconde chambre de pression de fluide (81) pour solliciter le second piston (83) vers une position initiale lorsque l'actionnement de la pédale est annulé ;
dans lequel une force de sollicitation exercée par le second ressort de rappel (82) lors du déplacement du second piston (83) par une seconde course à partir de la position initiale est inférieure à une force de sollicitation exercée par le premier ressort de rappel (72).

4. Appareil de commande de freinage (10) selon la revendication 2, dans lequel le premier piston (73) et le second piston (83) sont couplés entre eux et dans lequel une structure pour empêcher le second piston (83) de s'éloigner du premier piston (73) selon une distance supérieure à une distance prédéterminée, est prévue dans la première chambre de pression de fluide (71).

5. Appareil de commande de freinage (10) selon la revendication 1, dans lequel :
le simulateur de course est configuré pour communiquer avec la première chambre de pression de fluide (71),
dans lequel le premier piston (73) est configuré afin d'être déplacé en premier lorsque la pédale de frein est actionnée.

6. Appareil de commande de freinage (10) selon la revendication 5, comprenant en outre :
un premier ressort de rappel (72) disposé à l'intérieur de la première chambre de pression de fluide (71) pour solliciter le premier piston (73) vers une position initiale lorsque l'actionnement de la pédale de frein est annulé ; et
un second ressort de rappel (82) disposé à l'intérieur de la seconde chambre de pression de fluide (81) pour solliciter le second piston (83) vers une position initiale lorsque l'actionnement de la pédale de frein est annulé,
dans lequel une force de sollicitation exercée par le premier ressort de rappel (72) lors du déplacement du premier piston (73) par une première course à partir de la position initiale est inférieure à une force de sollicitation exercée par le second ressort de rappel (82).

7. Appareil de commande de freinage (10) selon la revendication 1, dans lequel :
le simulateur de course est configuré pour communiquer avec la première chambre de pression de fluide (71),
l'appareil de commande de freinage (10) comprenant en outre :
un premier ressort de rappel (72) disposé à l'intérieur de la première chambre de pression de fluide (71) pour solliciter le premier piston (73) vers une position initiale lorsque l'actionnement de la pédale de frein est annulé ; et
un second ressort de rappel (82) disposé à l'intérieur de la seconde chambre de pression de fluide (81) pour solliciter le second piston (83) vers une position initiale lorsque l'actionnement de la pédale de frein est annulé,
dans lequel une force de sollicitation exercée par le second ressort de rappel (82) lors du déplacement du second piston (83) par une seconde course à partir de la position initiale est inférieure à une force de sollicitation exercée par le premier ressort de rappel (72).

8. Appareil de commande de freinage (10) selon la revendication 1, dans lequel :
le simulateur de course est configuré pour communiquer avec la première chambre de pression de fluide (71),
l'appareil de commande de freinage (10) comprenant en outre :
un premier ressort de rappel (72) disposé à l'intérieur de la première chambre de pression de fluide (71), pour solliciter le premier piston (73) vers une position initiale lorsque l'actionnement de la pédale de frein est annulé ; et
un second ressort de rappel (82) disposé à l'intérieur de la seconde chambre de pression de fluide (81), pour solliciter le second piston (83) vers une position initiale lorsque l'actionnement de la pédale de frein est annulé,
dans lequel une force de sollicitation exercée par le premier ressort de rappel (72) lors du déplacement du premier piston (73) par une première course à partir de la position initiale est inférieure à une force de sollicitation exercée par le second ressort de rappel (82).
